# EUROPÄISCHE PATENTANMELDUNG

(11) **EP 2 211 065 A1**
(43) Veröffentlichungstag der Anmeldung: **28.07.2010**
(21) Anmeldenummer: 09179587.2
(22) Anmeldetag: 17.12.2009
(51) Int. Cl.: F16C 13/04

(54) **Falzmaschine mit Messerwellenhalterung**

(30) Priorität: 22.01.2009 DE 202009000797 U
(71) Anmelder: Maschinenbau Oppenweiler Binder GmbH & Co. KG, 71570 Oppenweiler (DE)
(72) Erfinder: Tegtmeier, Bodo, 73553, Alfdorf-Pfahlbronn (DE); Stöckel, Klaus, 71404, Korb (DE); Geue, Jürgen, 71549, Auenwald-Unterbrüden (DE)
(74) Vertreter: Sloboshanin, Sergej

(57) **Zusammenfassung**

Die Falzmaschine umfasst wenigstens ein einem Falzwerk zugeordnetes Paar von Messerwellen (18, 20), die in einer Arbeitsstellung mit ihren Enden drehbar gelagert sind. An der Innenseite einer Seitenwand (10) des Falzwerks ist wenigstens eine Halterung (14, 16) vorgesehen, in die eine Messerwelle (18, 20) mit einem Ende gesteckt werden kann.

## Beschreibung

Die Erfindung betrifft eine Falzmaschine mit wenigstens einem Paar von Messerwellen, die einem Falzwerk zugeordnet sind und in einer Arbeitsstellung mit ihren Enden drehbar gelagert sind.

Eine solche Falzmaschine ist aus der DE 203 07 169 U1 bekannt. Um bei dieser Falzmaschine einen schnellen Ausbau und Einbau der Messerwellen zu ermöglichen und um das Einstellen der Werkzeuge auf den Messerwellen zu erleichtern, sind die Messerwellen beidseitig in einer Kassette gelagert, die durch eine bedienerseitige Seitenwand aus einer Einschubstellung, in der sich die Messerwellen in ihrer Arbeitsstellung befinden, in eine Auszugstellung verschiebbar ist, in der sich die Messerwellen außerhalb der Falzmaschine befinden. Eine solche Konstruktion ist für den Ausbau und Einbau der Messerwellen und das Verstellen der Werkzeuge sehr gut geeignet, sie ist jedoch konstruktiv relativ aufwändig.

Wenn beispielsweise die Messerwellen neu mit Werkzeugen bestückt werden müssen, ist es erforderlich, die Messerwellen zu entnehmen, damit die Wellenenden frei werden, über die nicht mehr benötigte Werkzeuge von den Messerwellen abgezogen und neue Werkzeuge auf die Messerwellen aufgesteckt werden können. Hierzu ist es bislang erforderlich, die schweren Messerwellen auszubauen und aus der Maschine oder der oben erwähnten Kassette zu heben. Dies ist jedoch sehr mühsam und erfordert einen hohen Kraftaufwand. Wenn für die losen Messerwellen eine ungeeignete Ablage gewählt wird, besteht Unfallgefahr und die Gefahr, dass Werkzeuge beschädigt werden.

Nachdem die Messerwellen neu mit Werkzeugen bestückt worden sind, müssen die Werkzeuge auf genaue axiale Position gestellt und auf der Welle arretiert werden. Oft wird zwar ein neues Werkzeug bestückt, aber die Position des Werkzeuges ändert sich nicht. Werden beide Messerwellen ausgebaut, gehen beim Neubestücken die Positionen der Werkzeuge verloren. Die Werkzeuge müssen bei eingebauten Messerwellen neu positioniert werden.

Der Erfindung liegt die Aufgabe zugrunde, mit konstruktiv einfachen Mitteln eine Falzmaschine zu schaffen, die eine Halterung für ausgebaute Messerwellen aufweist, wodurch die die Handhabung der Messerwellen bei der Entnahme vereinfacht, das Bestücken der Messerwellen erleichtert wird und das Positionieren der Werkzeuge nach dem Bestücken vereinfacht wird..

Diese Aufgabe wird erfindungsgemäß dadurch gelöst, dass an der Innenseite einer Seitenwand des Falzwerks wenigstens eine Halterung vorgesehen ist, in die eine Messerwelle mit einem Ende gesteckt werden kann. Die Halterung ermöglicht es, die Messerwelle unmittelbar nach dem Ausbau an der Halterung anzubringen, so dass die Messerwelle von der Falzmaschine weggebracht werden muss. Sie ist bevorzugt am Rand der Falzmaschine anzuordnen. Bei einer Taschenfalzmaschine wird die Halterung bevorzugt oberhalb des Ausgangs des Parallelbruchs angeordnet. Die Orientierung der Messerwellen in der Halterung entspricht bevorzugt der Orientierung in Einbauposition, um die Handhabung zu erleichtern.

Bei einer bevorzugten Ausführungsform weist die Halterung ein der entsprechenden Seitenwand zugeordnetes oberes Widerlager und ein von der Seitenwand abgewandtes unteres Widerlager auf, wobei der vertikale Abstand der beiden Widerlager so gewählt ist, dass eine horizontal eingesteckte Messerwelle unten an dem oberen Widerlager angliegt und oben auf dem unteren Widerlager aufliegt.

Bevorzugt weist das obere Widerlager eine nach unten offene Ausnehmung zur Aufnahme der Messerwelle auf, deren oberer Abschnitt konform zum Außenumfang der Messerwelle ausgebildet ist und die sich von dem oberen Abschnitt aus nach unten erweitert. Das untere Widerlager weist eine nach oben offene Ausnehmung zur Aufnahme der Messerwelle auf, deren unterer Abschnitt konform zum Außenumfang der Messerwelle ausgebildet ist, und die sich von dem unteren Abschnitt aus nach oben erweitert. Hierdurch wird eine automatische Zentrierung der Messerwelle beim Einstecken geschaffen.

Damit beide Messerwellen eines Messerwellenpaars gleichzeitig an der Seitenwand angebracht werden können, sind vorzugsweise zwei Halterungen horizontal nebeneinander an der Seitenwand vorgesehen, die zweckmäßigerweise ein Teil bilden. Die beiden Halterungen werden dabei so angeordnet, dass die Position der eingesteckten Messerwellen zueinander ihrer relativen Anordnung in eingebautem Zustand in der Falzmaschine entspricht.
Diese Ausführungsform als Doppelhalter ermöglicht die Halterung beider Messerwellen in relativ zueinander passender Position. Das vereinfacht die Positionierung der Werkzeuge.

Die erfindungsgemäßen Halterungen, mit denen die der Erfindung zugrunde liegende Aufgabe gelöst werden kann, sind Gegenstand der Patentansprüche 6 und 7.

Ein Ausführungsbeispiel der Erfindung wird nachstehend anhand von Zeichnungen näher erläutert. Es zeigen:
Figur 1 eine an einer Seitenwand einer Falzmaschine angebrachte Doppelhalterung mit eingesteckten Messerwellen,
Figur 2 die Doppelhalterung von Figur 1,
Figur 3 den Schnitt III-III von Figur 1,
Figur 4 den Schnitt IV-IV von Figur 3 und
Figur 5 den Schnitt V-V von Figur 3.

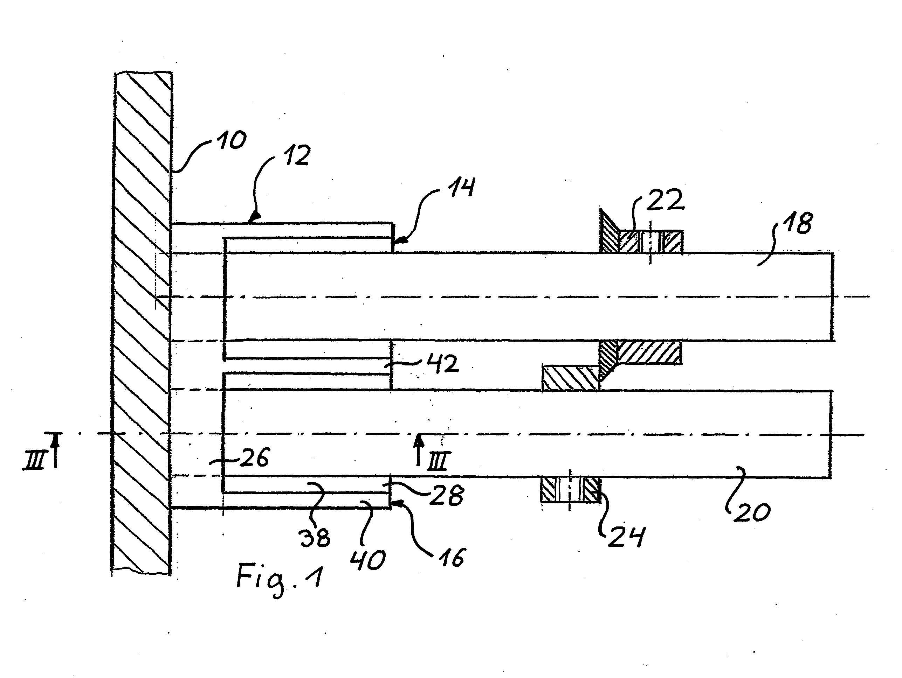

In Figur 1 ist eine Doppelhalterung 12 gezeigt, die an einer Seitenwand 10 einer Falzmaschine, zum Beispiel eines Taschenfalzwerks, angeordnet ist. Die Halterung 12 ist einteilig ausgebildet und weist zwei in horizontaler Richtung nebeneinander angeordnete Halterungen 14, 16 für jeweils eine Messerwelle 18 bzw. 20 auf.

Die Doppelhalterung 12 ist einteilig ausgebildet und durch Fräsen eines quaderförmigen Blockes aus Aluminium gebildet.

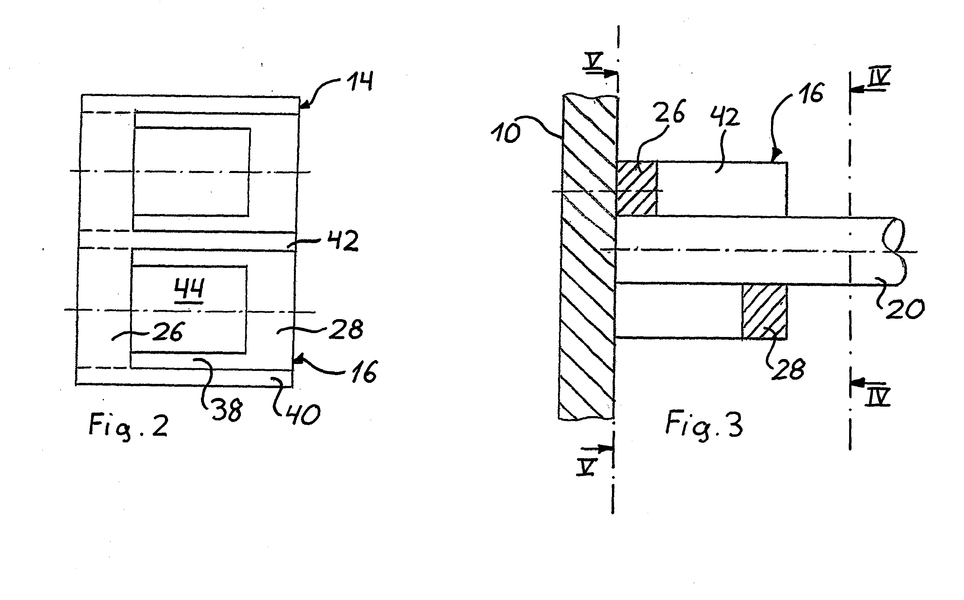

Wie es in Figur 3 zu erkennen ist, weist die Halterung 16 angrenzend an die Seitenwand 10 ein oberes Widerlager 26 auf. Ein unteres Widerlager 28 ist im Abstand zur Seitenwand und zu dem oberen Widerlager 26 ausgebildet.

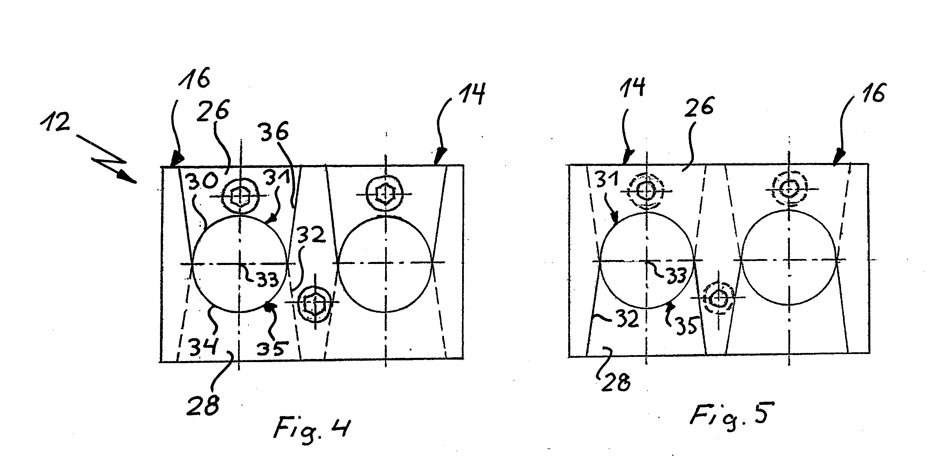

Wie es die Figuren 4 und 5 zeigen, weist das obere Widerlager 26 eine nach unten offene Ausnehmung 31 und das untere Widerlager 28 eine nach oben offene Ausnehmung 35 auf. Die Form der Ausnehmung 36 entspricht der Form der Ausnehmung 31. Sie ist jedoch bezüglich der Ausnehmung 31 um eine horizontale Mittelachse 33, die mit der Mittelachse einer eingesteckten Messerwelle 18, 20 übereinstimmt, um 180° gedreht. Die Ausnehmung 31 weist einen oberen, halbkreisförmigen Abschnitt 30 auf, dessen Durchmesser dem Durchmesser einer Messerwelle 18 bzw. 20 entspricht. Von dem halbkreisförmigen Abschnitt 30 erweitert sich die Ausnehmung 31 symmetrisch zu einer vertikalen Mittelebene in der die Mittelachse 33 liegt. Auf gleiche Weise weist die untere Ausnehmung 35 einen halbkreisförmigen unteren Abschnitt 34 auf, der in einen oberen Abschnitt 36 übergeht, der sich nach oben hin erweitert.

Wie es die Figuren 4 und 5 erkennen lassen, sind die halbkreisförmigen Abschnitte 30 bzw. 34 zentrisch zur Mittelachse 33 ausgebildet, so dass in der Ansicht von Figur 4 und 5 eine insgesamt kreisförmige Führung in der Halterung 16 gebildet wird, deren Durchmesser dem Durchmesser einer Messerwelle 18 bzw. 20 entspricht.

Die Halterung 16 ist seitlich durch Seitenwände 40 bzw. 42 geschlossen, die sich senkrecht zur Seitenwand 10 erstrecken. Zwischen den Seitenwänden 40, 42 und dem oberen Widerlager 26 ist die Halterung 16 nach oben offen, um ein einfaches Einführen einer Messerwelle 18 bzw. 20 zu ermöglichen. An ihrer Unterseite weist die Halterung 16 eine zentral angeordnete Durchgangsöffnung 44 in der Unterseite 38 auf, die sich von dem unteren Widerlager 28 bis zur Seitenwand 10 der Falzmaschine erstreckt. Die Breite der Durchgangsöffnung 44 ist gleich oder breiter als der Durchmesser der Messerwellen 18 bzw. 20.

In Figur 1 sind die Messerwellen 18 bzw. 20 so in die Halterungen 14 bzw. 16 eingesteckt, dass sie an der Seitenwand 10 anschlagen. In dieser Position sind die Messerwellen 18 bzw. 20 zueinander genauso angeordnet, wie in eingebautem Zustand in der Falzmaschine. Wenn sich die Messerwellen 18 bzw. 20 in dieser Stellung befinden, kann die Position von Messerrädern 22 oder Walzen 24 auf den Messerwellen 18 bzw. 20 zueinander genau festgelegt werden.

## Patentansprüche

1. Falzmaschine mit wenigstens einem einem Falzwerk zugeordneten Paar von Messerwellen (18, 20), die in einer Arbeitsstellung mit ihren Enden drehbar gelagert sind, **dadurch gekennzeichnet, dass** an der Innenseite einer Seitenwand (10) des Falzwerks wenigstens eine Halterung (14, 16) vorgesehen ist, in die eine Messerwelle (18, 20) mit einem Ende gesteckt werden kann.

2. Falzmaschine nach Anspruch 1, **dadurch gekennzeichnet, dass** die Halterung (14, 16) ein der Seitenwand (10) zugewandtes oberes Widerlager (26) und ein von der Seitenwand (10) abgewandtes unteres Widerlager (28) aufweist, wobei der vertikale Abstand der beiden Widerlager (26, 28) so gewählt ist, dass eine horizontal eingesteckte Messerwelle (18, 20) unten an dem oberen Widerlager (26) anliegt und oben auf dem unteren Widerlager (28) aufliegt.

3. Falzmaschine nach Anspruch 2, **dadurch gekennzeichnet, dass** das obere Widerlager (26) eine nach unten offene Ausnehmung (31) zur Aufnahme der Messerwelle (18, 20) aufweist, deren oberer Abschnitt (30) konform zum Außenumfang der Messerwelle (18, 20) ausgebildet ist und die sich von dem oberen Abschnitt (30) aus nach unten erweitert, und dass das untere Widerlager (28) eine nach oben offene Ausnehmung (35) zur Aufnahme der Messerwelle (18, 20) aufweist, deren unterer Abschnitt (34) konform zum Außenumfang der Messerwelle ausgebildet ist, und die sich von dem unteren Abschnitt (34) aus nach oben erweitert.

4. Falzmaschine nach einem der vorhergehenden Ansprüche, **dadurch gekennzeichnet, dass** zwei Halterungen (14, 16) nebeneinander an der Seitenwand (10) so angebracht sind, dass zwei in die Halterungen (14, 16) eingesteckte Messerwellen (16, 18) zueinander so positioniert sind wie in eingebautem Zustand in der Falzmaschine.

5. Falzmaschine nach Anspruch 2, **dadurch gekennzeichnet, dass** die zwei Halterungen (14,16) ein Teil bilden.

6. Halterung (14, 16) für eine Messerwelle (18, 20), die ein oberes Widerlager (26) und ein im horizontalen Abstand von dem oberen Widerlager (26) angeordnetes unteres Widerlager (28) aufweist, wobei der vertikale Abstand der beiden Widerlager (26, 28) so gewählt ist, dass eine horizontal eingesteckte Messerwelle (18, 20) unten an dem oberen Widerlager (26) anliegt und oben auf dem unteren Widerlager (28) aufliegt.

7. Halterung nach Anspruch 6, **dadurch gekennzeichnet, dass** das obere Widerlager (26) eine nach unten offene Ausnehmung (31) zur Aufnahme der Messerwelle (18, 20) aufweist, deren oberer Abschnitt (30) konform zum Außenumfang der Messerwelle (18, 20) ausgebildet ist, und die sich von dem oberen Abschnitt (30) aus nach unten erweitert, und dass das untere Widerlager (28) eine nach oben offene Ausnehmung (35) zur Aufnahme der Messerwelle (18, 20) aufweist, deren unterer Abschnitt (34) konform zum Außenumfang der Messerwelle ausgebildet ist, und die sich von dem unteren Abschnitt (34) aus nach oben erweitert.
